Europäisches Patentamt

European Patent Office

Office européen des brevets

Publication number: **0 299 264**
**A2**

# EUROPEAN PATENT APPLICATION

Application number: **88110215.6**

Date of filing: **27.06.88**

Int. Cl.⁴ **G06F 5/06**

Priority: **15.07.87 US 72960**

Date of publication of application:
**18.01.89 Bulletin 89/03**

Designated Contracting States:
**AT BE CH DE ES FR GB GR IT LI LU NL SE**

Applicant: **ADVANCED MICRO DEVICES, INC.**
**901 Thompson Place P.O. Box 3453**
**Sunnyvale, CA 94088(US)**

Inventor: **Olson, Timothy A.**
**1210 Henderson Avenue, No.4**
**Sunnyvale California 94086(US)**
Inventor: **Ajmera, Dhaval**
**3480 Granada Avenue, No.304**
**Santa Clara California 95051(US)**

Representative: **Altenburg, Udo, Dipl.-Phys. et al**
**Patent- und Rechtsanwälte**
**Bardehle-Pagenberg-Dost-Altenburg**
**Frohwitter-Geissler & Partner Galileiplatz 1**
**Postfach 86 06 20**
**D-8000 München 86(DE)**

A byte queing/dequeuing apparatus for handling variable-length data words/instructions in a single clock cycle.

A byte queueing/dequeueing apparatus for handling variable-length data words/instructions in a single clock cycle is described, comprising four FIFO's, an input rotator and an output rotator. Variable-length data words instructions are stored in the FIFO's after being transferred through the input rotator and rotated by a number of places, depending upon the number of bytes previously queued in the FIFO's. Similarly, the bytes transferred through the output rotator are rotated by a number of places, depending upon the number of bytes previously dequeued. Control signals selectively enable the FIFO's and point to the rows having the next available storage space for queuing and the next available byte for dequeuing.

EP 0 299 264 A2

FIG. 1

# A BYTE QUEUING/DEQUEUING APPARATUS FOR HANDLING VARIABLE-LENGTH DATA WORDS/INSTRUCTIONS IN A SINGLE CLOCK CYCLE

## Background of the Invention

### Field of the Invention

The present invention relates to buffer memories in general and in particular to a buffer memory comprising a plurality of FIFO's with input and output rotators for queuing/dequeuing variable-length data words/instructions.

### Description of the Prior Art

Digital computing and word processing systems comprise one or more devices such as memories, input/output devices, central processing units, etc. Each of the above-described devices in any given system may operate at different data rates as well as on different length data words and/or instructions (hereinafter sometimes collectively called data words or data).

Heretofore, methods comprising buffer memories, commonly called first-in, first-out random access memories or, simply, FIFO's, have been used for buffering data in computing and word processing systems comprising such devices in a number of different applications. For example, in a first such application, to handle data transfers between devices operating at different data rates, it has been the practice heretofore to store or queue data in a FIFO at a first rate and read or dequeue the data from the FIFO at a second, higher or lower, rate. In a second such application, to buffer variable-length data between such devices, it has been the practice to use a shift register on the input and/or the outut of a FIFO. In this application, words of a predetermined length are transferred between the FIFO and the shift register. Once in the shift register, the word or any part thereof may be accessed. The disadvantage of both of these methods is that multiple clock cycles are required to transfer data to and from a single FIFO if the desired word length is not compatible with the FIFO being used or the desired word length varies from access to access. For example, to buffer a 3-byte instruction using a FIFO which queues or dequeues one byte at a time would require a separate clock cycle to access each of the bytes in the instruction. Consequently, prior known buffering of variable-length data words and variable-length instructions has been time consuming.

## Summary of the Invention

In view of the foregoing, principal objects of the present invention are a method and apparatus for buffering variable-length data words and variable-length instructions in a single clock cycle.

In accordance with the above objects, there are provided a plurality of FIFO's, an input rotator coupled between an input data bus and the FIFO's, an output rotator coupled between an output data bus and the FIFO's and associated logic circuits for providing control signals and pointers.

In a preferred embodiment of the present invention, four 1-byte-wide FIFO's are provided. The rotators are capable of handling 4 bytes at a time. The logic circuits are provided for generating the control signals necessary to separately enable the FIFO's, rotate the bytes in the rotators and point to the active storage locations in the FIFO's.

In operation, 4-byte data words are transferred from a memory to the input rotator. From the input rotator, one or more of the bytes is transferred to a corresponding one of the FIFO's. Before being transferred to the FIFO's, the bytes are rotated in the input rotator depending upon the number of bytes previously queued or stored in the FIFO's according to the formula

$$x \bmod A = y$$

where

$x$ = number of bytes previously queued in the FIFO's

$A$ = number of FIFO's in the apparatus

$y$ = number of places the bytes in the input rotator are rotated in a first direction before being stored in the FIFO's.

When bytes are being dequeued from the FIFO, they are transferred four at a time to the output rotator and from the output rotator to the output data bus. Before being transferred to the output data bus, the bytes transferred to the output rotator are rotated in the output rotator according to the formula

$$W \bmod A = Z$$

where

$W$ = number of bytes previously dequeued from the FIFO's

$A$ = number of FIFO's in the apparatus

Z = number of places the bytes in the output rotator are rotated in a second direction before being placed on said output data bus.

During the above-described operation of the apparatus, the number of bytes being queued and dequeued is monitored and used for generating internal control signals required for enabling the proper FIFO's, operating the rotators and generating the pointers.

## Brief Description of the Drawings

Other objects, features and advantages of the present invention will become apparent upon consideration of the following detailed description and the accompany drawings, in which:

Fig. 1 is a block diagram of an embodiment of the present invention;

Figs. 2, 3 and 4 are diagrams showing the queuing of 10 bytes of data in the FIFO's in three clock cycles; and

Figs. 5, 6 and 7 are diagrams showing the dequeuing of 10 bytes of data from the FIFO's in three clock cycles.

## Description of the Preferred Embodiments

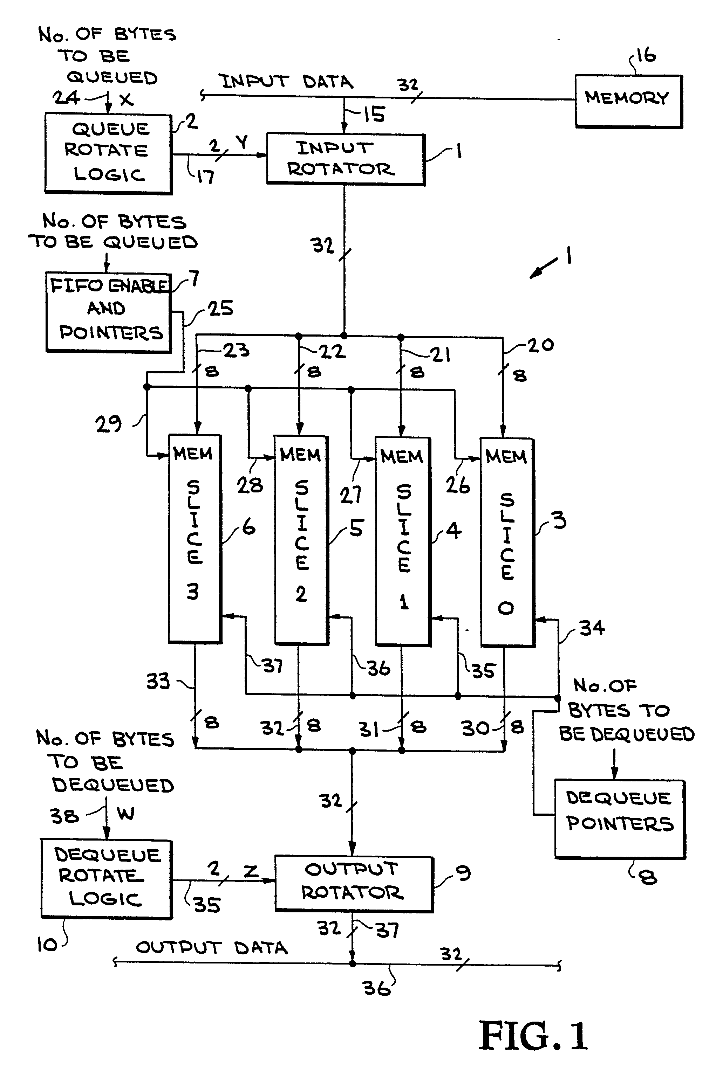

Referring to Fig. 1, there is provided in accordance with the present invention a byte queuing/dequeuing apparatus designated generally as 1. In the apparatus 1 there is provided an input rotator 1, a queue logic circuit 2, four FIFO's 3, 4, 5 and 6, also called slice 0, slice 1, slice 2 and slice 3, respectively, a FIFO enable and pointer generating circuit 7 and a dequeue pointer logic circuit 8. On the output of the FIFO's 3-6 there is provided an output rotator 9 and a dequeue logic circuit 10.

In the input rotator 1 there are provided 32 inputs for coupling the input rotator 1 to a 32-line input data bus 15. The input data bus 15 is provided for coupling the apparatus 1 to a memory 16. The input rotator 1 is also provided with a pair of control signal inputs for coupling the input rotator 1 to the queue logic 2 by means of a 2-wire control signal bus 17. The outputs of the input rotator 1 are provided by 32 outputs which are connected in each of 4 sets of 8 outputs each to the inputs of FIFO's 3-6 by means of 8-line input data buses 20, 21, 22 and 23, respectively.

In the queue logic circuit there is provided an input coupled to a control signal line 24 for receiving a control signal corresponding to the number of bytes to be queued in the FIFO's 3-6 as well as an output for coupling to the control signal line 17.

In addition to inputs coupled to the data input buses 20-23, the FIFO's 3-6 are also provided with an input coupled to the FIFO enable and pointers circuit 7 by means of a control signal bus 25. One of each of the bus 25 wires is coupled to the enable input of the FIFO's 3-6, respectively, by means of control signal lines 26, 27, 28 and 29, respectively. Others of the bus 25 wires are coupled to the FIFO's 3-6 for providing queuing.

The output of the FIFO's 3-6 are provided on four 8-wire output data buses 30, 31, 32 and 33, respectively. Dequeue pointer generating circuit 8 is coupled to the FIFO's 3-6 by means of control signal lines 34, 35, 36 and 37, respectively for providing dequeuing pointers.

In the output rotator 9 there is provided 32 inputs coupled to the outputs of the FIFO's 3-6 by means of the data buses 30-33, two control signal inputs coupled to the dequeuing logic circuit 10 by means of a 2-wire control signal bus 35 and 32 outputs coupled to an output data bus 36 by means of an output data bus 37.

In the dequeuing logic circuit 10 there is provided an input coupled to a control signal line 38 for receiving a control signal corresponding to the number of bytes to be dequeued in the apparatus 1 and an output coupled to the control signal bus 35.

The operation of apparatus 1 will now be described with respect to the queuing and dequeuing of three variable-length words into and from the apparatus. In general, a control signal corresponding to the number of bytes to be queued in the FIFO's 3-6 are used by the queue logic circuit for generating an internal control signal to the rotator 1 for rotating the bytes received by the input rotator 1 from the input data bus 15 according to the formula

$$X \bmod A = y$$

where

X = number of bytes previously queued in said FIFO's

A = number of FIFO's in said apparatus

y = number of places the bytes in said input rotator are rotated to the left before being stored in said FIFO's.

A control signal corresponding to the number of bytes currently being queued is used by the circuit 7 to enable FIFO's 3, 4, 5 and/or 6, respectively. Also, circuit 7 generates a pointer for each of the FIFO's which points to the row in the FIFO which is available for storing the next byte.

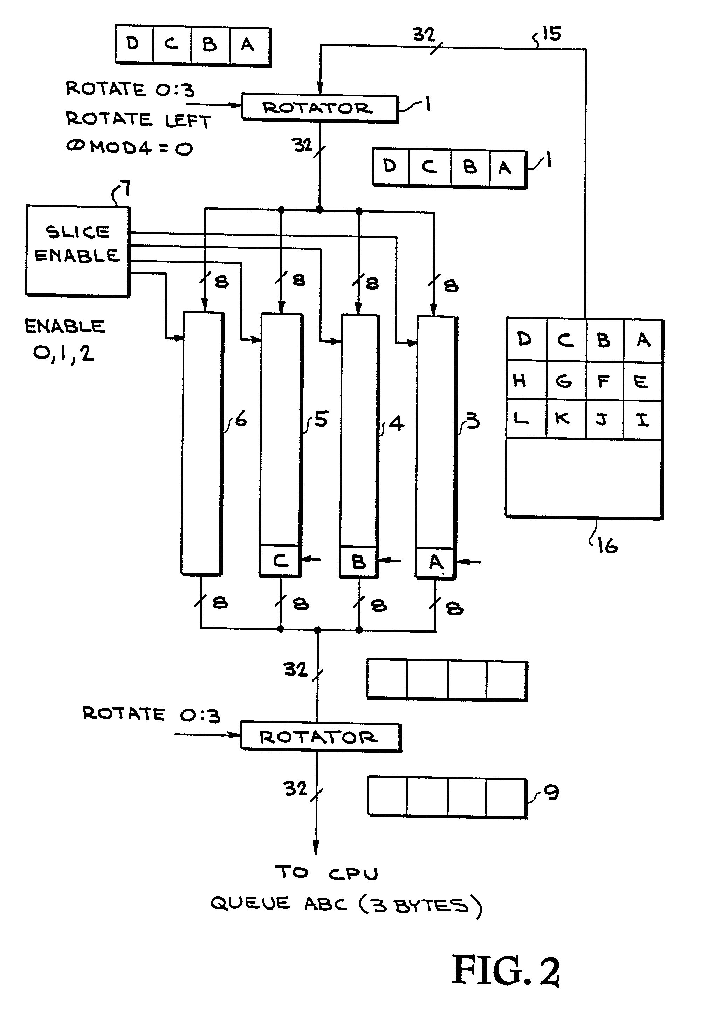

Referring to Fig. 2, memory 16 comprises three 4-byte words ABCD, EFGH and IJKL, wherein each of the letters represents one byte. If, as shown in Fig. 2, three bytes ABC are to be queued, four bytes ABCD are transferred to the input of rotator 1 and appear on the output of the rotator 1 without rotation. It should be noted that regardless of the number of bytes being queued, 4 bytes are always transferred from the memory 16 to the rotator 1. The reason why bytes ABCD are not rotated is that the number X in the above formula equals 0 because initially there are no previously queued bytes. With the queuing pointers of each of the FIFO's pointing to the next row available for receiving a byte, and FIFO's 3, 4 and 5 being enabled by the circuit 7, bytes ABC are stored in row 1 of FIFO's 3, 4 and 5. After bytes ABC are stored, the queuing pointers, represented by a solid arrow are incremented to point at the next available row in its respective FIFO.

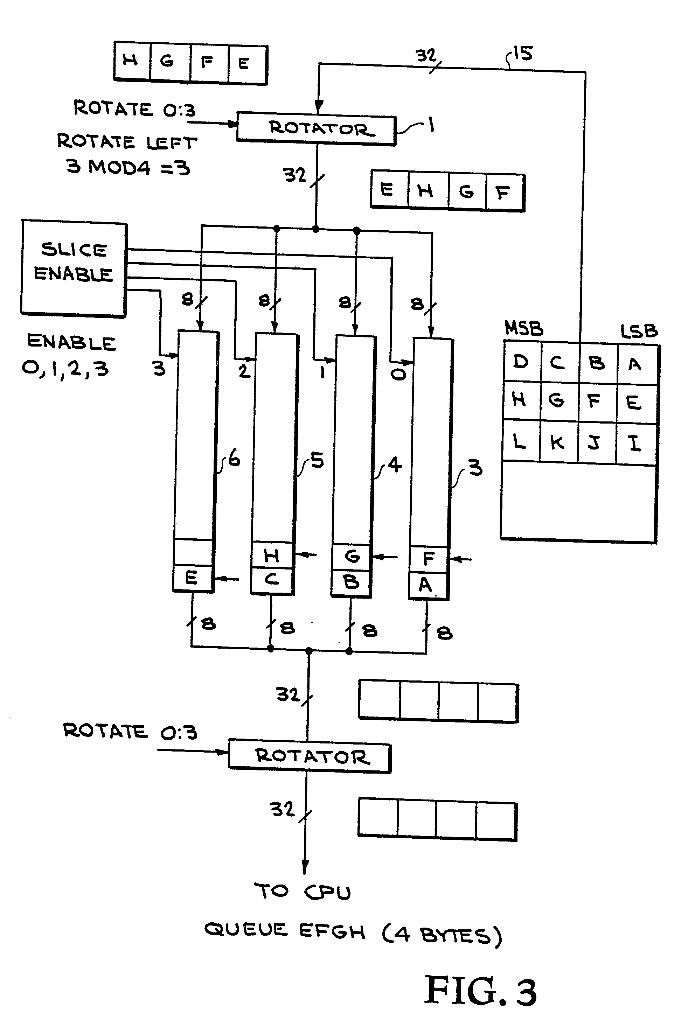

Referring to Fig. 3, to queue the next 4 bytes EFGH, bytes EFGH are transmitted on input data bus 15 to the input rotator 1. In the input rotator 1 the bytes are rotated three places to the left according to the formula $X \bmod A = y$ where $X = 3$, the number of bytes previously queued in said FIFO's. At the same time, FIFO's 3, 4, 5 and 6 are enabled and the queuing pointers which were incremented after the previous queuing operation was completed, point to the second row of FIFO's 3, 4 and 5 and the first row of FIFO 6. Thus bytes EFGH are queued in FIFO's 3-6, as shown, and the queuing pointers are again incremented such that the queuing pointers point to the third row of FIFO's 3, 4 and 5 and the second row of FIFO 6.

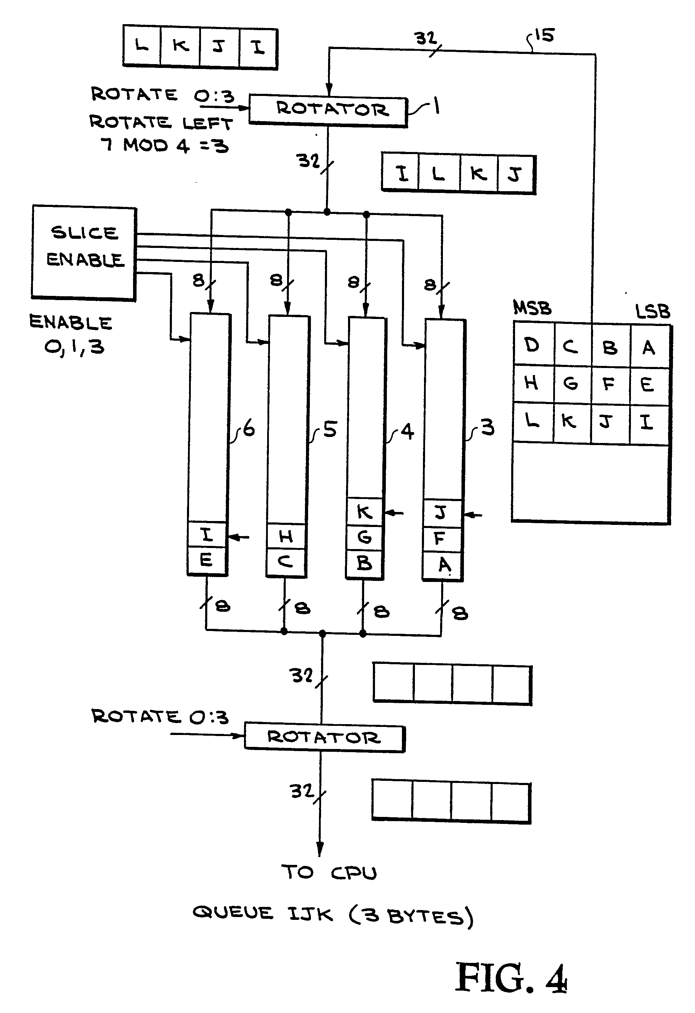

Referring to Fig. 4, in the next queuing operation, 3 bytes IJK are queued. To queue bytes IJK, the four bytes IJKL are transferred on the input data bus 15 to the input rotator 1. In the input rotator 1, the bytes IJKL are rotated three places to the left according to the formula $X \bmod A = y$ where $X = 7$, the number of bytes previously queued. At the same time, FIFO's 3, 4 and 6 are enabled, resulting in the queuing of bytes IJK therein.

From the foregoing, it can be seen that each of the variable-length words are queued in the FIFO's 3, 4, 5 and 6 in an end-to-end relationship, beginning with the least significant byte A.

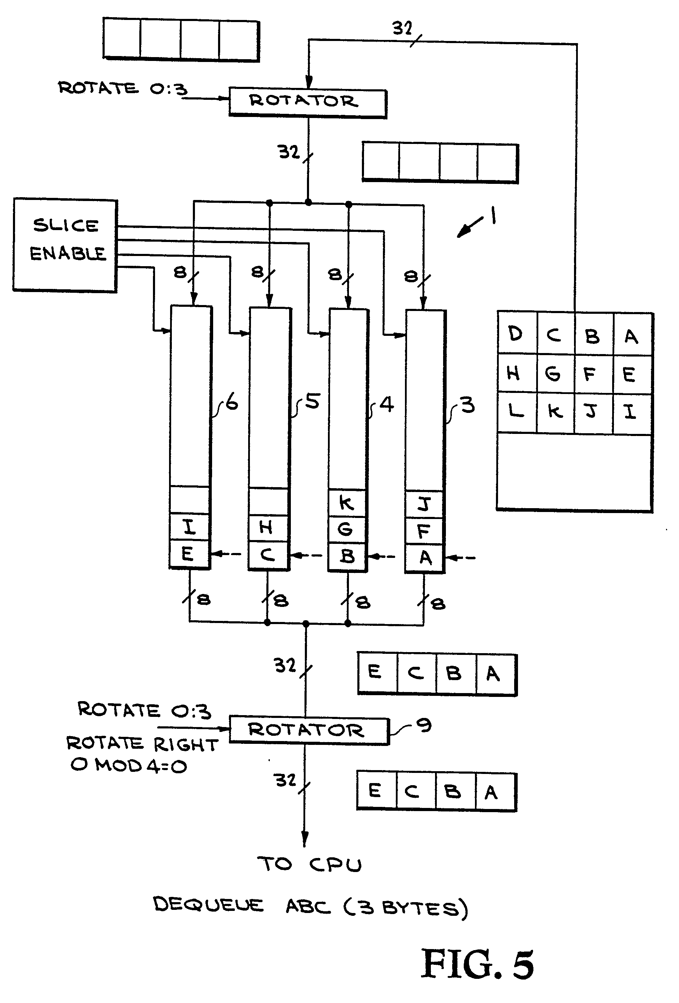

Referring to Figs. 5-7, when dequeuing bytes from the apparatus 1, a minimum of 4 bytes are sent to the output rotator 9 from each row in the FIFO's 3-6. For example, when dequeuing three bytes ABC, bytes ABCE are transferred from the FIFO's 3-6 to the rotator 9 under the control of the dequeuing pointers which point to the first row of each of the FIFO's having bytes available for dequeuing. In the rotator 9, the bytes are rotated according to the formula

$$W \bmod A = Z$$

where
W = number of bytes previously dequeued from said FIFO's
A = number of FIFO's in said apparatus
Z = number of places the bytes in said output rotator are rotated to the right before being placed on said output data bus.

In the above example, $W = 0$ since no previous bytes had been dequeued and therefore the output of output rotator 9 comprises the bytes ABCE in the same order as they appeared at the input thereof.

While the bytes ABCE are placed on the data output bus, only the bytes ABC will be accepted from the output data bus by the CPU. Accordingly, only the dequeuing pointers, represented by broken arrows, pointing to the first row in FIFO's 3, 4 and 5 will be incremented in anticipation of the next dequeuing operation.

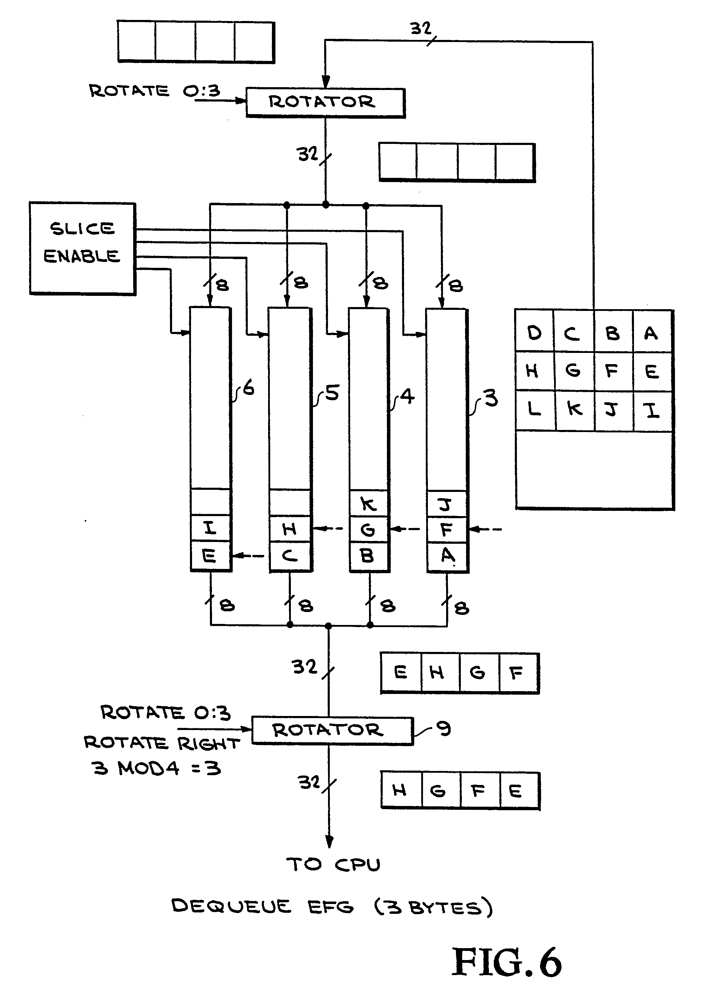

Referring to Fig. 6, in the next operation, bytes EFG are dequeued. To dequeue bytes EFG, bytes FGHE are transferred from FIFO's 3-6 as indicated by the broken dequeuing pointers associated therewith to the input of the output rotator 9. In the rotator 9 the bytes FGHE are rotated three places to the right according to the formula $W \bmod A = Z$ where $W = 3$, the number of bytes previously dequeued. Accordingly, the bytes appearing at the output of the rotator 9 are in the order EFGH, beginning with the least significant byte. Once again, bytes EFGH are transferred to the data output bus but only three of the bytes EFG will actually be accepted by the CPU. Accordingly, after the completion of the transfer to the output data but 15, only the dequeuing pointers pointing to the second row of FIFO's 3 and 4 and the first row of FIFO 6 are incremented.

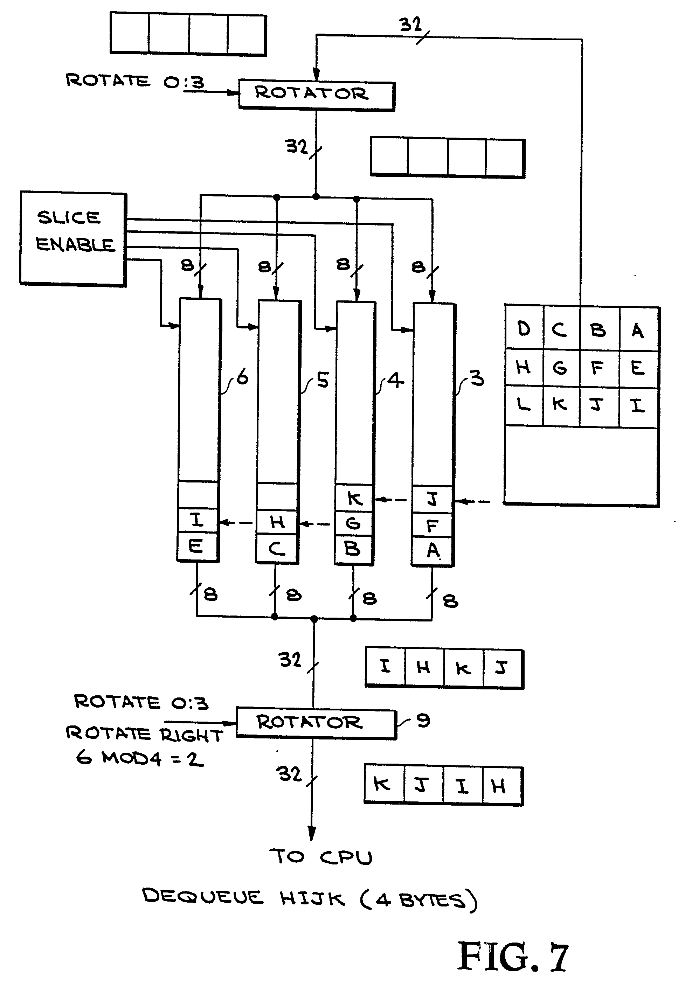

Referring to Fig. 7, in the next example, four bytes, HIJK are to be dequeued. Accordingly, bytes JKHI are transferred from the FIFO's 3, 4, 5 and 6 to the input of the rotator 9 under the control of the pointers associated with said FIFO's. In the rotator 9 the bytes JKHI are rotated two places to the right according to the formula $W \bmod A = Z$ where $W = 6$, the number of bytes previously rotated. Thus, the bytes appearing on the output data bus are HIJK beginning with the least significant byte, respectively. Since four bytes are currently being dequeued, the CPU attached to the output data bus will accept all four bytes and each of the pointers shown by the broken lines in Fig. 7 will be incremented to the next available rows.

From the foregoing description, it can be seen that by using four independently controllable FIFO's and two rotators variable-length data words of from 1 to 4 bytes can be queued and dequeued in a single clock cycle. It will also be noted that by selectively enabling each FIFO and incrementing the pointers as required, maximum storage capacity is maintained.

While an embodiment of the present invention is described above, it is contemplated that various modifications may be made thereto without departing from the spirit and scope thereof. Accordingly, it is intended that the embodiment described be considered only as an illustration of the present invention and that the scope thereof should not be limited thereto but be determined by reference to the claims hereinafter provided.

## Claims

1. A byte queuing/dequeuing apparatus for handling variable-length data words/instructions in a single clock cycle comprising:
an input data bus;
means for placing successive sets of a predetermined number of bytes of data on said input data bus;
an output data bus;
a plurality of FIFO's equal in number to said predetermined number of bytes, each of said FIFO's being capable of handling one of said predetermined number of bytes at any one time;
an input rotator coupled between said input data bus and said FIFO's;
an output rotator coupled between said FIFO's and said output data bus;
means responsive to the number of said bytes previously queued in said FIFO's for generating a control signal to said input rotator for rotating the bytes received by said input rotator from said input data bus according to the formula
X MOD A = y
where
X = number of bytes previously queued in said FIFO's
A = number of FIFO's in said apparatus
y = number of places the bytes in said input rotator are rotated in a first direction before being stored in said FIFO's
means responsive to a control signal corresponding to the number of bytes currently being queued for enabling the next available FIFO's as required for storing said predetermined number of bytes;
means responsive to the number of said bytes previously dequeued from said FIFO's for generating a control signal to said output rotator for rotating the bytes received by said output rotator from said FIFO's according to the formula
W MOD A = Z
where
W = number of bytes previously dequeued from said FIFO's
A = number of FIFO's in said apparatus
Z = number of places the bytes in said output rotator are rotated in a second direction before being placed on said output data bus; and
means responsive to a control signal corresponding to the number of bytes currently being dequeued for pointing to the next FIFO's having bytes available to be dequeued.

2. An apparatus according to claim 1 wherein said input and output data buses are each capable of handling four bytes of data at one time and said predetermined number of bytes comprises four bytes.

3. An apparatus according to claim 1 wherein said first direction is to the left and said second direction is to the right.

4. A byte queuing/dequeuing apparatus for handling variable-length data words/instructions comprising:
an input data bus;
means for placing successive sets of four bytes of data on said input data bus;
an output data bus;
a plurality of four FIFO's, each of said FIFO's being capable of handling one of said bytes at any one time;
an input rotator coupled between said input data bus and said FIFO's;
an output rotator coupled between said FIFO's and said output data bus;
means responsive to the number of said bytes previously queued in said FIFO's for generating a control signal to said input rotator for rotating the bytes received by said input rotator from said input data bus according to the formula
X MOD 4 = y
where
X = number of bytes previously queued in said FIFO's
y = number of places the bytes in said input rotator are rotated to the left before being stored in said FIFO's;
means responsive to a control signal corresponding to the number of bytes currently being queued for enabling the next available FIFO's as required for storing up to four bytes of data on said input data bus;
means responsive to the number of said bytes previously dequeued from said FIFO's for generating a control signal to said output rotator for rotating the bytes received by said output rotator from said FIFO's according to the formula
W MOD 4 = Z
where
W = number of bytes previously dequeued from said FIFO's
Z = number of places the bytes in said output rotator are rotated to the right before being placed on said output data bus; and
means responsive to a control signal corresponding to the number of bytes currently being dequeued for pointing to the next four FIFO's having bytes available to be dequeued.

5. A method of handling variable-length data words.instructions in an apparatus having an input data bus, an output data bus, an input rotator, an output rotator and a plurality of FIFO's, comprising the steps of:

placing successive sets of a predetermined number of bytes of data on said input data bus;

transferring said predetermined number of bytes from said input data bus to said input rotator for storage in said FIFO's;

rotating the bytes received by said input rotator from said input data bus according to the formula

$$X \bmod A = y$$

where

$X$ = number of bytes previously queued in said FIFO's

$A$ = number of FIFO's in said apparatus

$y$ = number of places the bytes in said input rotator are rotated in a first direction before being stored in said FIFO's

generating a control signal corresponding to the number of bytes currently being queued;

enabling the next available FIFO's as required for storing said bytes currently being queued;

transferring said predetermined number of bytes from said FIFO's to said output rotator;

generating a control signal to said output rotator for rotating the bytes received by said output rotator from said FIFO's according to the formula

$$W \bmod A = Z$$

where

$W$ = number of bytes previously dequeued from said FIFO's

$A$ = number of FIFO's in said apparatus

$Z$ = number of places the bytes in said output rotator are rotated in a second direction before being placed on said output data bus;

generating a control signal corresponding to the number of bytes currently being dequeued; and

pointing to the FIFO's next in order having bytes available to be dequeued.

6. A method according to claim 5 wherein said input and output data buses are each capable of handling four bytes of data at one time and said predetermined number of bytes comprises four bytes.

7. A method according to claim 5 wherein said first direction is to the left and said second direction is to the right.

FIG. 1

FIG. 2

FIG. 3

FIG. 4

EP 0 299 264 A2

DEQUEUE ABC (3 BYTES)

FIG. 5

FIG.6

ROTATE 0:3 → ROTATOR

32

SLICE ENABLE

8  8  8  8

6  5  4  3

| D | C | B | A |
| H | G | F | E |
| L | K | J | I |

| | | K | J |
| I | H | G | F |
| E | C | B | A |

8  8  8  8

32

| I | H | K | J |

ROTATE 0:3
ROTATE RIGHT
6 MOD4 = 2

ROTATOR  9

32

| K | J | I | H |

TO CPU

DEQUEUE HIJK (4 BYTES)

FIG. 7